# EUROPEAN PATENT APPLICATION

(11) **EP 1 075 123 A1**
(43) Date of publication of application: **07.02.2001**
(21) Application number: 00306293.2
(22) Date of filing: 24.07.2000
(51) Int. Cl.: H04L 29/06, H04Q 7/38, H04Q 7/22

(54) **Dynamic home agent system for wireless communication systems**

(30) Priority: 06.08.1999 US 369940
(71) Applicant: LUCENT TECHNOLOGIES INC., Murray Hill, New Jersey 07974-0636 (US)
(72) Inventor: Gorrepati, Patuardhana Babu, Naperville, IL 60563 (US); Wang, Jin, Lisle, Illinois 60532 (US); Liu, Chung-Zin, Naperville, Illinois 60565 (US)
(74) Representative: Watts, Christopher Malcolm Kelway, Dr.

(57) **Abstract**

The dynamic Home Agent system for wireless communication systems uses the existing infrastructure of the telephony signaling networks and enhanced cellular authentication centers to support dynamic Home Agents, either in visited wireless networks or home wireless networks in a secure manner to provide packet data services to a roaming mobile subscriber station. Authentication Centers are deployed in these networks as a cellular security mechanism to provide cellular service qualification checks and to prevent cellular fraud by the exchange of confidential keys. The cellular security mechanism is enhanced by the use of an additional key, the Dynamic Mobile IP Key (DMIPKEY) which is used by the dynamic Home Agent in the visited wireless network for authenticating Mobile IP registrations requested by the mobile subscriber station. In ANSI systems, the DMIPKEY can be derived from the Shared Secret Data key or Shared Secret Data part A (SSD_A), since the latter is used for authentication purposes. With necessary CAVE algorithm enhancements, both a mobile subscriber station equipped with the CAVE algorithm and its Authentication Center can independently produce the DMIPKEY. Since the mobile subscriber station is equipped with the CAVE algorithm, the DMIPKEY does not need to be transmitted over the air.

## Description

### Field Of The Invention

This invention relates to wireless communication systems and in particular to the provision of packet data services to a roaming mobile subscriber station by means of the dynamic assignment of Mobile IP Home Agents and IP addresses that involve dynamic assignment in a secure manner.

### Problem

It is a problem in the field of wireless communication systems to provide roaming wireless subscriber stations with access to packet data services that involve dynamic assignment of Home Agents and Internet Protocol addresses in a secure manner. The provision of such services in the wireless subscriber station home wireless network involves the distribution of secret keys that enable the home wireless communication system to authenticate the identity of the wireless subscriber station regardless of whether the mobile subscriber station is in the home wireless network or the visited wireless network. Secure key distribution in these scenarios requires widespread use of key distribution centers for wireless packet data services. A packet data centric infrastructure with these key distribution centers is however not widely available today or can be expensive to build and deploy. Without such an infrastructure, the distribution of keys over an insecure communication network can compromise this data, enabling the perpetration of communications fraud in the form of theft of services using the illegally obtained authentication data of the wireless subscriber station.

Advanced packet data services are part of the third generation (3G) wireless communication systems as specified by the ITU/IMT-2000 requirements for cellular communications. In addition to static Internet Protocol (IP) address assignment, dynamic Internet Protocol address assignment is required in 3G/IMT-2000 systems. With static IP address assignment, the mobile subscriber station's static IP address is fixed and assigned by the home wireless network. When the mobile subscriber station is away from its home wireless network (roaming), a special data communications link (Mobile IP tunnel) needs to be established between the visited wireless network and the home wireless network. In this case, IP packets destined to the mobile subscriber station's IP address of the home wireless network are routed to the home wireless network according to standard IP routing. A Mobile IP tunnel is used in the home wireless network to redirect the IP packets that are destined to the mobile subscriber station's static IP address to the visited wireless network where the roaming mobile subscriber station is located and being served. When a mobile subscriber station moves from one wireless network coverage area to another, Mobile IP mobility binding updates are performed between the mobile subscriber station and its Home Agent (HA) in the home wireless network. Since both the mobile station's IP address and its Home Agent IP address are static or fixed, a shared secret between the mobile subscriber station and the Home Agent can be preprogrammed into the mobile station and its Home Agent so that the Home Agent can authenticate Mobile IP registrations requested by the mobile subscriber station and perform mobility binding updates in a secure manner.

While Mobile IP solves the problem of packet data mobility across wireless networks, there are several issues that remain unresolved. First, the unnecessarily long data transmission routes via the Mobile IP tunnel that is always anchored in the mobile station's home wireless network introduce extra network latency and increased network resource usage; the impact of increased network latency on real-time applications such as IP telephony (voice over IP) and H.323 could be severe. Second, as the number of cellular packet data subscribers grows to the millions, static IP address assignment may not scale up and this feature may be unavailable. Third, even when users are not active, the Home Agent still needs to maintain the mapping of fixed IP addresses and the corresponding Mobile IP secrets that are shared between the mobile subscriber stations and their Home Agents. The burden for the Home Agent to provide telephony-strength reliability and availability could be overwhelming.

Dynamic assignment of Home Agents and mobile station's IP address by the visited wireless network avoids unnecessary long routes, helps to reduce network latency and improves network resource utilization. It also help scalability. Since the mapping entries in the Home Agent can now be created on the fly, the number of active Mobile IP entries is shorter. Caching instead of hosting and shorter entries help reduce the burden on the Home Agent For example, the requirement of reliability and availability may be far less stringent than otherwise. Meanwhile a Mobile IP tunnel within the visited wireless network between the Foreign Agent and the Home Agent ,shown in Figure 4, provides the necessary framework of mobility management should the mobile subscriber station move to a new visited wireless network.

This kind of Mobile IP tunnel involves a dynamic Home Agent which requires a dynamically generated Mobile IP secret to be shared between the mobile subscriber station and its dynamic Home Agent in a secure manner so that subsequent mobility binding updates can be performed securely. When the Home Agent is dynamic, selected by the visited wireless network, the simple key distribution solution used in the previous static IP address assignment case (preassigning static keys into the mobile stations) no longer works. Dynamic Home Agents thus require a more sophisticated key distribution scheme to support the creation of a dynamic Mobile IP secret between the mobile subscriber station and the dynamic Home Agent in the visited wireless network. However, if the provision and distribution of the dynamic secret between the mobile station and the dynamic Home Agent are not conducted in a secure manner, subsequent mobility binding updates are not secure and prone to attack. The cost of building an infrastructure with public/private cryptokeys and the necessary key distribution centers to provide the required data security is expensive and burdensome. Also, the use of dynamic Home Agent requires that the mobile subscriber station know about the IP address of selected dynamic Home Agent which may change on a per session basis.

### Solution

The above-described problems are solved and a technical advance achieved by the present dynamic home agent system for wireless communication systems which uses the existing infrastructure of the telephony signaling networks and enhanced cellular authentication centers to support dynamic Home Agents, either in visited wireless networks or home wireless networks in a secure manner.

Examples of telephony signaling networks are ANSI-41 networks, GSM MAP networks or combinations thereof and are considered relatively secure because they are only accessible to wireless service providers who have business roaming agreements. Telephony signaling networks also provide telephony-strength reliability, availability, and quality of service guarantees. Authentication Centers are deployed in these networks as a cellular security mechanism to provide cellular service qualification checks and to prevent cellular fraud. In particular, in ANSI systems the Authentication Key (A_Key) is a secret shared between a mobile subscriber station and its associated Authentication Center. The A_Key is never transmitted over the air nor is it transmitted among Mobile Switching Centers. A Shared Secret Data (SSD) key, which changes from time to time as determined necessary by the Authentication Center, is derived from the A_Key and other data relating to the mobile subscriber station using the Cellular Authentication and Voice Encryption (CAVE) algorithm. Both the Authentication Center and a mobile subscriber station equipped with the CAVE algorithm can generate the Shared Secret Data key independently using the CAVE algorithm. While the Authentication Center may share the Shared Secret Data key with the visited wireless network that serves the mobile subscriber station for more efficient local processing, the Shared Secret Data key is never transmitted over the air. The Shared Secret Data key is used to produce other keys, such as the SMEKEY for encryption of digital signaling messages over the air and the VPMASK key for encryption of digital voice traffic over the air.

When the Shared Secret Data key is not shared with the visited wireless network, either the SMEKEY or VPMASK or both can be sent from the Authentication Center to the visited system for its use. The Visitor Location Register however cannot derive the Shared Secret Data key from the SMEKEY or VPMASK Since both a mobile subscriber station equipped with CAVE algorithm and the Authentication Center can produce the SMEKEY and VPMASK independently based on the Shared Secret Data key, there is no need to transmit the SMEKEY or VPMASK over the air.

This cellular security mechanism can be enhanced by the use of an additional key, denoted as the Dynamic Mobile IP Key (DMIPKEY) which is to be used by the dynamic Home Agent in the visited wireless network for authenticating Mobile IP registrations requested by the mobile subscriber station. The DMIPKEY can be derived from the Shared Secret Data key or Shared Secret Data (SSD) part A (SSD_A), since the latter is used for authentication purposes. With necessary CAVE algorithm enhancements, both a mobile subscriber station equipped with the CAVE algorithm and its Authentication Center can independently produce the DMIPKEY. Since the mobile subscriber station is equipped with the CAVE algorithm, the DMIPKEY does not need to be transmitted over the air.

### Brief Description Of Drawing

Figure 1 illustrates in block diagram form the overall of a typical wireless communication system of the prior art where static Mobile IP Home Agents in the Home Network use Mobile IP tunnels to serve mobile stations with static IP addresses for cellular packet data services;
Figure 2 illustrates in flow diagram form the process of generation of the keys of the prior art used for authentication and encryption of data in existing wireless communication systems using the CAVE paradigm;
Figure 3 illustrates in flow diagram form the process for generation of the keys used for authentication and encryption of data in the wireless communication system in which the present dynamic Home Agent is implemented in the visited network;
Figure 4 illustrates in block diagram form the overall of a typical wireless communication system in which the present dynamic Home Agent is implemented;
Figures 5 and 6 illustrate in flow diagram form two variations of the operation of the system of Figure 4;
Figure 7 illustrates in block diagram form the overall of a typical wireless communication system in which the present dynamic Home Agent is implemented in the home wireless network;
Figure 8 illustrates in flow diagram form the operation of the system of Figure 7
Figure 9 illustrates in flow diagram form the process of generation of the keys of the prior art used for authentication and encryption of data in existing wireless communication systems using the GSM paradigm; and
Figure 10 illustrates in flow diagram form the process for generation of the keys used for authentication and encryption of data in the wireless communication system using the GSM paradigm in which the present dynamic Home Agent is implemented in the visited network.

### Detailed Description

### Wireless Communication System with Static Mobile IP Home Agents

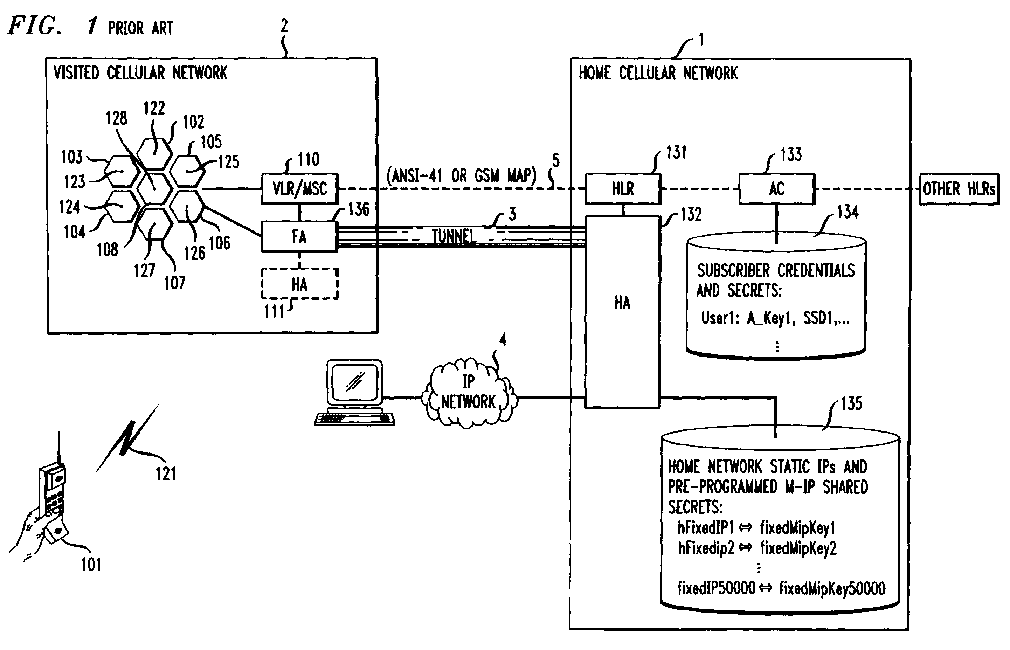

Figure 1 illustrates in block diagram form the overall of a typical wireless communication system of the prior art where static Mobile IP Home Agents use Mobile IP tunnels to serve mobile stations with static IP addresses for cellular packet data services In the description of the disclosed invention, the major entities are the wireless communication device 101, base stations 122-128, and the mobile switching center 110, Home Location Register 131, Authentication Center 133, Foreign Agent 136 and Home Agent 111. The mobile switching center 110 contains a mobile telecommunication controller, call processing and an administrative call processing. A major function of these entities is the execution of call processing associated with the mobile switching center 110. The Home Agent 111, 132 and Foreign Agent 136 provide packet data mobility management functionality that involves Mobile IP registration authentication IP tunneling, as specified by Mobile IP related RFCs (Request For Comments). The base stations 122-128 contained in the wireless cells 102-108 communicate with wireless communication device 101 using RF channels 121. RF channels 121 convey both command messages as well as digital data, which may represent voice signals being articulated at the wireless communication device 101 and the far-end party. With a CDMA system, the mobile subscriber station communicates with at least one base station 112.

Advanced packet data services are part of the third generation (3G) wireless communication systems as specified by the ITU/IMT-2000 requirements for wireless communications. In addition to static Internet Protocol (IP) address assignment, dynamic Internet Protocol address assignment is required in 3G/IMT-2000 systems. With static IP address assignment, when the mobile subscriber station 101 is away from its home wireless network (roaming in a visited wireless network 2) and the mobile subscriber station's fixed IP address is assigned by the home wireless network 1, a data communications link (Mobile IP tunnel 3) needs to be established between the visited wireless network 2 and the home wireless network 1. In particular, the Mobile IP tunnel 3 interconnects the Foreign Agent 136 of the visited wireless network 2 with the Home Agent 132 of the home wireless network 1. The Mobile IP tunnel 3 redirects the IP packets that are destined to the mobile subscriber station's static IP address to the visited wireless network 2 where the roaming mobile subscriber station is located and being served.

When a mobile subscriber station 101 moves from one wireless network coverage area to another, a Mobile IP mobility binding update is performed between the mobile subscriber station 101 and its Home Agent (HA) 132 as a result of Mobile IP registrations. Since a pre-programmed secret exists between the mobile subscriber station 101 and the Home Agent 132, the Home Agent 132 can authenticate Mobile IP registrations requested by the mobile subscriber station 101 and the mobility binding is thus secure.

### Authentication and Encryption With CAVE Algorithm

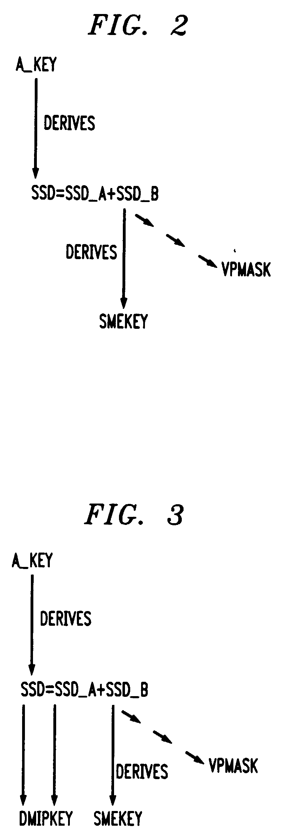

Figure 2 illustrates in flow diagram form the process for generation of the keys of the prior art used for authentication and encryption of data. Telephony signaling networks can be ANSI-41 networks, GSM MAP networks or combinations thereof and are considered relatively secure because they are only accessible to wireless service providers who have business roaming agreements. Authentication Centers 133 are deployed in these networks 1, 2 as a cellular security mechanism to provide cellular service qualification checks and to prevent cellular fraud. In particular, the Authentication Key (A_Key) is a secret shared between a mobile subscriber station 101 and its associated Authentication Center 133. The A_Key is never transmitted over the air nor is it transmitted among Mobile Switching Centers. A Shared Secret Data (SSD) key, which changes from time to time as determined necessary by the Authentication Center 133 is derived from the A_Key other data relating to the mobile subscriber station 101 using the CAVE algorithm. Both the Authentication Center 133 and a mobile subscriber station 101 equipped with the CAVE algorithm can generate the Shared Secret Data key independently using the CAVE algorithm. While the Authentication Center 133 may share the Shared Secret Data key with the visited wireless network 2 that serves the mobile subscriber station 101 for more efficient processing, the Shared Secret Data key is never transmitted over the air. The Shared Secret Data key is used to produce other keys, such as the SMEKEY for encryption of digital signaling messages over the air and the VPMASK key for encryption of digital voice traffic over the air.

When the Shared Secret Data key is not shared with the visited wireless network 2, either the SMEKEY or VPMASK or both can be sent from the Authentication Center 133 to the visited wireless network 2 for its use. The Visitor Location Register 110 however cannot derive the Shared Secret Data key from the SMEKEY or VPMASK. Since both a mobile subscriber station 101 equipped with CAVE algorithm and the Authentication Center 133 can produce the SMEKEY and VPMASK independently based on the Shared Secret Data key, there is no need to transmit the SMEKEY or VPMASK over the air.

### Wireless Communication System with Dynamic Mobile IP Home Agents

Figure 4 illustrates in block diagram form the overall architecture of a typical wireless communication system where dynamic Mobile IP Home Agents in the visited wireless network 2 use dynamic IP addresses for cellular packet data services. Dynamic IP address assignment by the visited wireless network 2 avoids unnecessary long routes, helps to reduce network latency and improves network resource utilization. It also help scalability. Since the mapping in the database 135 of the Home Agent 111 can now be created on the fly, the number of active Mobile IP entries is shorter. Caching instead of hosting and shorter entries help reduce the burden on the Home Agent . A Mobile IP tunnel 3 within the visited wireless network 2 between the Foreign Agent 136 and the Home Agent 111 provides the necessary framework of mobility management should the mobile subscriber station 101 move to a new visited wireless network. For example, the requirement of reliability and availability may be far less stringent than otherwise.

This kind of Mobile IP tunnel involves a dynamic Home Agent which requires a dynamically generated Mobile IP secret to be shared between the mobile subscriber station and its dynamic Home Agent in a secure manner so that subsequent mobility binding updates can be performed securely. When the Home Agent is dynamic, selected by the visited wireless network, the simple key distribution solution used in the previous static IP address assignment case (preassigning static keys into the mobile stations) no longer works. Dynamic Home Agents thus require a more sophisticated key distribution scheme to support the creation of a dynamic Mobile IP secret between the mobile subscriber station and the dynamic Home Agent in the visited wireless network. However, if the provision and distribution of the dynamic secret between the mobile station and the dynamic Home Agent are not conducted in a secure manner, subsequent mobility binding updates are not secure and prone to attack. The cost of building an infrastructure with public/private cryptokeys and the necessary key distribution centers to provide the required data security is expensive and burdensome. Also, the use of dynamic Home Agent requires that the mobile subscriber station know about the IP address of selected dynamic Home Agent which may change on a per session basis.

### Dynamic Home Agent in the Visited Wireless Network

This cellular security mechanism described in Figure 2 can be enhanced by the use of an additional key, the Dynamic Mobile IP Key, denoted DMIPKEY, which is used by the dynamic Home Agent 111 in the visited wireless network 2 for authenticating Mobile IP registrations requested by the mobile subscriber station 101, as shown in Figure 4. The DMIPKEY can be derived from the Shared Secret Data key or Shared Secret Data part A (SSD_A), since the latter is used for authentication purposes. With necessary CAVE algorithm enhancements, both a mobile subscriber station 101 equipped with the CAVE algorithm and its Authentication Center 133 can independently produce the DMIPKEY. Since the mobile subscriber station 101 is equipped with the CAVE algorithm, the DMIPKEY does not need to be transmitted over the air.

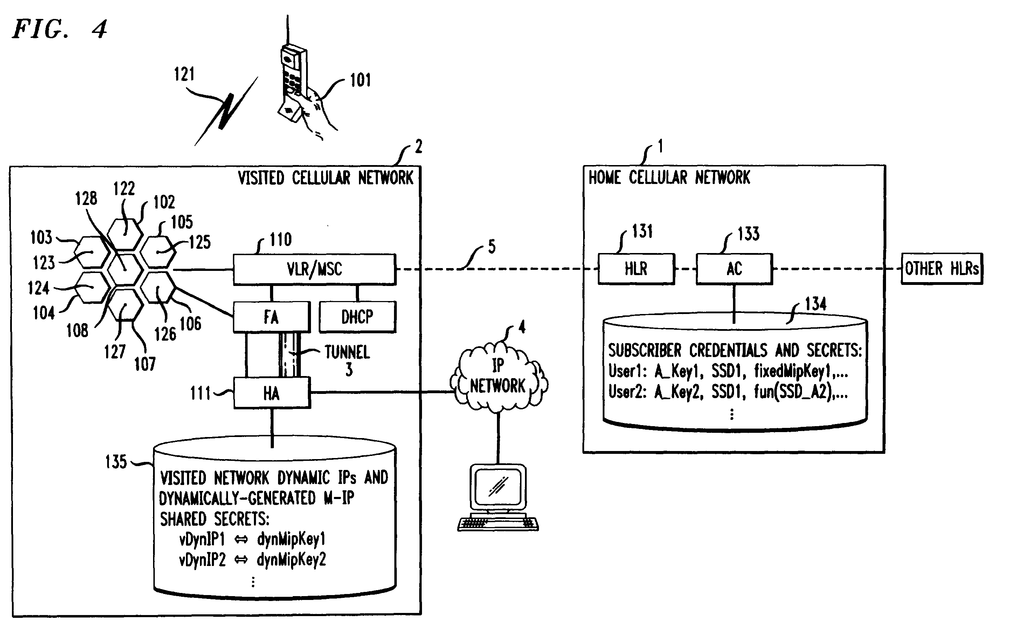

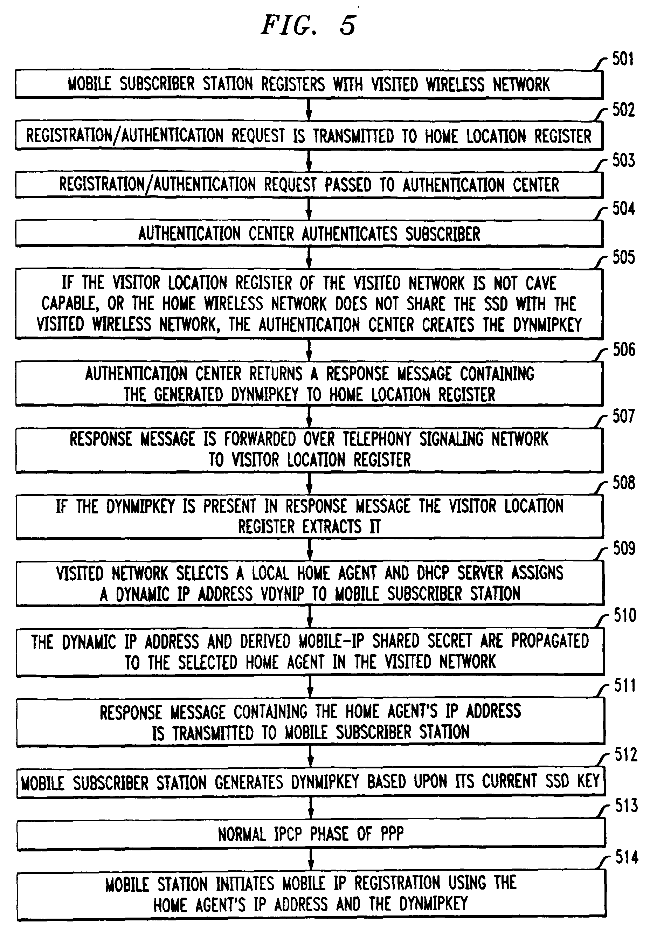

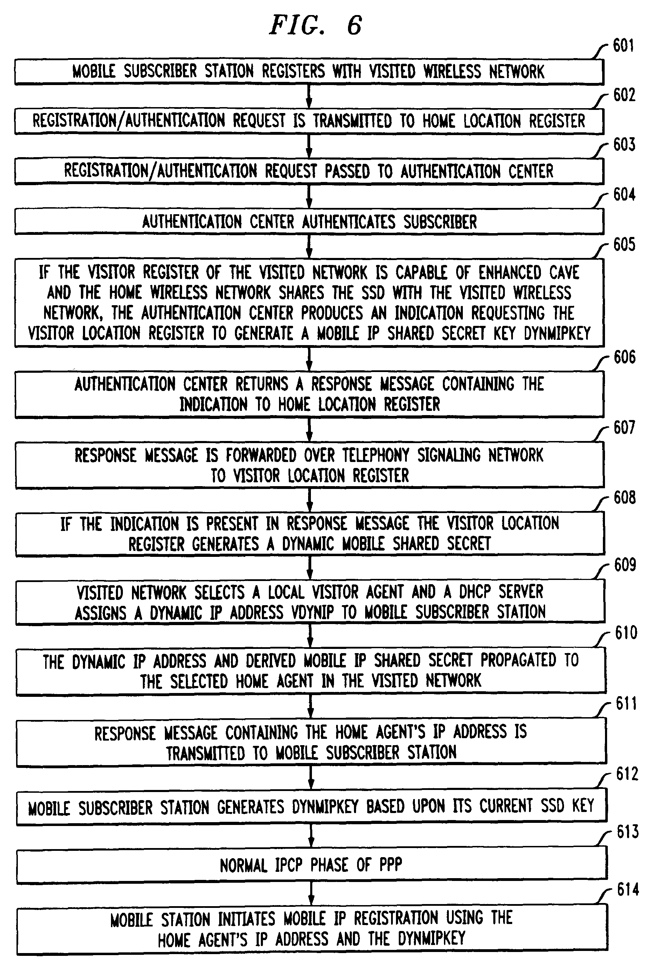

Figure 3 illustrates in flow diagram form the process for generation of the keys used for authentication and encryption of data in the wireless communication system in which the present dynamic Home Agent is implemented, while Figure 4 illustrates in block diagram form the overall architecture of a typical wireless communication system in which the present dynamic home agent is implemented and Figures 5 and 6 illustrate in flow diagram form two variations of the operation of the system of Figure 4.

The DMIPKEY can be used to support dynamic Home Agents in a visited wireless network 2. The process of dynamically generating a Mobile IP shared secret for a packet data subscriber is denoted as fun(SSD_A,...) in the Authentication Center 133 database 134 in Figure 4. The generated key is sent over the telephony signaling network 5 and propagated along with the dynamic IP address assigned to the mobile subscriber station 101 by the visited wireless network 2, in the Home Agent 111 of the visited wireless network 2. In particular, the mobile subscriber station 101 who is a roamer registers as shown in Figure 5 at step 501 with the visited wireless network 2 for packet data services and requests a dynamic IP address to be assigned by the visited wireless network 2. The registration/authentication request is transmitted at step 502 by the Visitor Location Register 110 through the telephony signaling network 5 to the Home Location Register 131 of the cellular subscriber's home wireless network 1, where it is passed to the Authentication Center 133 at step 503. The Authentication Center 133 authenticates the subscriber at step 504.

At step 505, if the Visitor Location Register 110 of the visited wireless network 2 is not CAVE algorithm capable, or if the home wireless network 1 does not share the SSD with the visited wireless network 2, then the Authentication Center 133 creates a dynamic Mobile IP shared secret, denoted dynMipKey, using the mobile subscriber station's SSD_A stored in the database 134 and the enhanced CAVE algorithm that generates the key via fun(SSD_A,...). The Authentication Center 133 returns the generated dynMipKey to the Home Location Register 131 at step 506 as part of the authentication response, which is forwarded over the telephony signaling network 5 to the Visitor Location Register 110 in the visited wireless network 2 at step 507. If the dynMipKey is present in the response message, at step 508 the Visitor Location Register 110 extracts it. The visited wireless network 2 selects a local Home Agent and the Dynamic Host Configuration Protocol (DHCP) server in the visited wireless network 2 assigns a dynamic IP address, denoted vDynIP, to the mobile subscriber station 101 at step 509, and the information of the mobile subscriber station's assigned dynamic IP address vDynIP and the derived Mobile IP shared secret dynMipKey is propagated to the Home Agent 111 in the visited wireless network 2 at step 510. The Home Agent's IP address is attached to the response message that is transmitted to the mobile subscriber station 101 at step 511. The mobile subscriber station 101 equipped with the enhanced Cellular Authentication and Voice Encryption algorithm generates the dynMipKey based on the SSD_A if the Home Agent's IP address is included in the response message at step 512. The normal IPCP phase of PPP starts during which the dynamic IP address allocated to the mobile subscriber station 101 by the DHCP and the DNS IP address are both provided to the mobile subscriber station 101 through IPCP message exchanges at step 513. At step 514, the mobile subscriber station initiates the Mobile IP registration using the Home Agent's IP address and the generated dynMipKey. If the home wireless network 1 shares the SSD with the Visitor Location Register 110 of the visited wireless network 2, the DMIPKEY can be generated by the Visitor Location Register 110 if it is equipped with the enhanced CAVE algorithm. As such, the DMIPKEY need not be included in the Home Location Register 131 authentication response message noted above. This is illustrated in flow diagram form in Figure 6 where the process of Figure 5 is modified to account for this capability. In particular, steps 601-604 of Figure 6 are identical to steps 501-504 of Figure 5. However, at step 605, if the Visitor Location Register 110 of the visited wireless network 2 is capable of enhanced CAVE algorithm, and the home wireless network 1 shares the SSD with the visited wireless network 2, the Authentication Center 110 produces an indication requesting the visitor location register 110 to generate a Mobile IP shared secret key dynMipKey. The Authentication Center 133 returns the indication to the Home Location Register 131 at step 606 as part of the authentication response, which is fowarded over the telephony signaling network 5 to the Visitor Location Register 110 in the visited wireless network 2 at step 607. If the indication is present in the response message, at step 608 the Visitor Location Register 110 generates a Mobile IP shared secret key, denoted dynMipKey, using the mobile subscriber station's SSD_A stored in the Visitor Location Register 110 and enhanced CAVE algorithm that generates the key via fun(SSD_A...). The visited wireless network 2 selects a local Home Agent and the Dynamic Host Configuration Protocol (DHCP) server in the visited wireless network 2 assigns a dynamic IP address vDynIP to the mobile subscriber station 101 at step 609, and the information of the mobile subscriber station's assigned dynamic IP address vDynIP and the derived Mobile IP shared secret dynMipKey is propagated to the Home Agent 111 in the visited wireless network 2 at step 610. The Home Agent's IP address is attached to the response message that is transmitted to the mobile subscriber station 101 at step 611. The mobile subscriber station 101 equipped with the enhanced Cellular Authentication and Voice Encryption algorithm generates the dynMipkey based on the SSD_A if the Home Agent's IP address is included in the response message at step 612. The normal IPCP phase of PPP starts during which the dynamic IP address allocated to the mobile subscriber station 101 by the DHCP and the DNS IP address are both provided to the mobile subscriber station 101 through IPCP message exchanges at step 613. At step 614, the mobile subscriber station initiates the Mobile IP registration using the Home Agent's IP address and the generated dynMipKey.

### Dynamic Home Agent in the Home Wireless Network

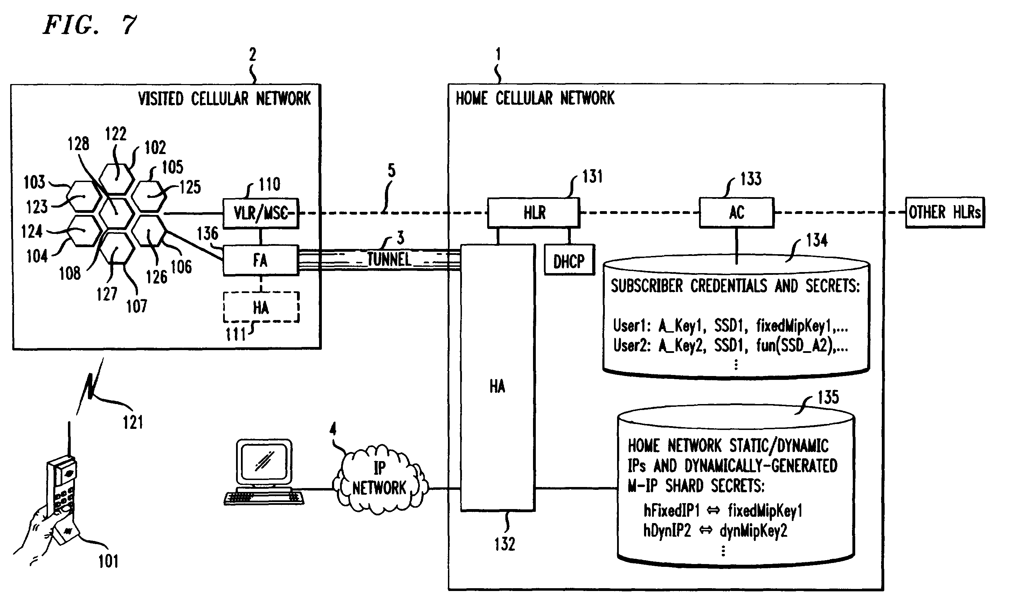

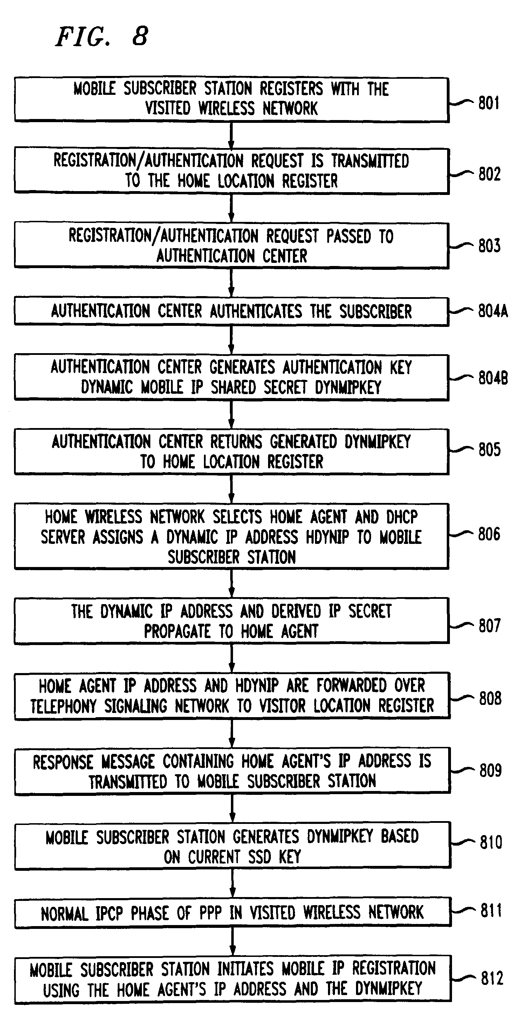

Figure 7 illustrates in block diagram form the overall of a typical wireless communication system in which the present dynamic Home Agent is implemented, and Figure 8 illustrates in flow diagram form the operation of the system of Figure 7. The same mechanism noted above with respect to Figure 4 can be used in the instance where the home wireless network 1 assigns dynamic IP addresses, using a dynamic Home Agent 132 located in the home wireless network 1. In particular, the mobile subscriber station 101 who is a roamer registers with the visited wireless network 2 for packet data services and requests a dynamic IP address to be assigned by the home wireless network 1 at step 801. The registration/authentication request is transmitted at step 802 by the Visitor Location Register 110 through the telephony signaling network 5 to the Home Location Register 131 of the cellular subscriber's home wireless network 1, where it is passed to the Authentication Center 133 at step 803. The Authentication Center 133 authenticates the subscriber at step 804A At step 804B, the Authentication Center 133 derives a dynamic Mobile IP shared secret, denoted as dynMipKey, using the mobile subscriber station's SSD_A data stored in the database 134 and an enhanced CAVE algorithm that generates the key via fun(SSD_A,...). The Authentication Center 133 at step 805 returns the Mobile IP shared secret to the Home Location Register 131 as part of the authentication response. The home wireless network 1 selects a Home Agent and the Dynamic Host Configuration Protocol (DHCP) server in the home wireless network 1 assigns a dynamic IP address, denoted as hDynIP, to the mobile subscriber station 101 at step 806, and the information of the mobile subscriber station's assigned dynamic IP address hDynIP and the derived Mobile IP shared secret dynMipKey is propagated to the Home Agent 111 in the home wireless network 1 at step 807. The Home Agent's IP address and the dynamic IP address hDynIP are forwarded over the telephony signaling network 5 to the Visitor Location Register 110 in the visited wireless network 2 at step 808, and the Home Agent's IP address is attached to the response message that is transmitted to the mobile subscriber station 101 at step 809. The mobile subscriber station 101 equipped with the enhanced CAVE algorithm generates the dynMipKey at step 810 based on the SSD_A if the Home Agent's IP address is included in the response message. The normal IPCP phase of PPP starts during which the dynamic IP address allocated to the mobile subscriber station 101 by the DHCP server and the DNS IP address are both provided to the mobile subscriber station 101 through IPCP message exchanges at step 811. At step 812, the mobile subscriber station initiates the Mobile IP registration using the Home Agent's IP address and the generated dynMipKey.

### GSM Capable Systems

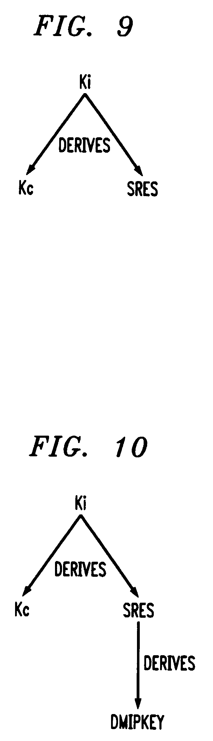

The above description is focused on the use of enhancements of the CAVE algorithm of commercially available CDMA and TDMA networks for the generation of the shared secret. However, there are wireless communication systems that do not use the CAVE algorithm and one significant alternative is the GSM network. Figure 9 illustrates in flow diagram form the process of generation of the keys of the prior art used for authentication and encryption of data in existing wireless communication systems using the GSM paradigm and Figure 10 illustrates in flow diagram form the process for generation of the keys used for authentication and encryption of data in the wireless communication system using the GSM paradigm in which the present dynamic Home Agent is implemented in the visited network and the home network.

GSM Authentication Centers are deployed in these GSM networks as a cellular security mechanism to provide cellular service qualification checks and to prevent cellular fraud. In particular, the Cipher Key (Kc) is a secret shared between a GSM mobile subscriber station and its associated Authentication Center. Both the GSM capable mobile subscriber station and the home network Authentication Center are capable of the GSM authentication algorithm (A3) and the cipher key generation algorithm (A8). The Cipher Key (Kc) is derived from Ki via the cipher key generation algorithm A8 and is used for encryption of digital signaling messages over the air and the for encryption of digital voice traffic over the air. The Signed Response (SRES) is derived from Ki via use of the GSM authentication algorithm A3 and is used to authenticate the GSM mobile subscriber station. Similar to the enhancements to the CDMA and TDMA networks described previously, Dynamic Mobile IP Key (DMIPKEY) can be derived from the Signed Response (SRES) or from Ki by the GSM Authentication Center and GSM mobile subscriber station, both of which are equipped with the enhanced GSM authentication algorithm. However, unlike the ANSI-41 Authentication Center where the Visitor Location Register could be CAVE capable and thus the DMIPKEY may be generated by the Visitor Location Register, the GSM Authentication Center always transmits the Authentication Center generated Signed Response (SRES) and Ki (among other information) to the Visitor Location Register through the Home Location Register. Thus, for GSM networks, the Authentication Center generated DMIPKEY is transmitted to the Visitor Location Register through the Home Location Register and the Visitor Location Register does not generate the DMIPKEY.

### Summary

The dynamic Home Agent system for wireless communication systems uses the existing infrastructure of the telephony signaling networks and enhanced cellular Authentication Centers to support dynamic Home Agents, either in visited wireless networks or home wireless networks in a secure manner. The existing cellular security mechanism that is based on the Cellular Authentication and Voice Encryption (CAVE) algorithm is enhanced by the use of an additional key, the Dynamic Mobile IP Key (DMIPKEY) which is used by the dynamic Home Agent in the visited wireless network or home wireless network for securely authenticating Mobile IP registrations requested by the mobile subscriber station.

## Claims

1. A dynamic home agent system for wireless communication systems to provide packet data services to a roaming mobile subscriber station in a visited wireless network by the dynamic assignment of a home agent in a one of a home wireless network and said visited wireless network, comprising:
means, responsive to said mobile subscriber station registering with said visited wireless network for packet data services and requesting a dynamic IP address of a one of said visited wireless network and said home wireless network to be assigned, for forwarding said request for a dynamic IP address to said home wireless network;
means, located in an authentication center in said home wireless network and said mobile subscriber station, for dynamically generating a Mobile Internet Protocol shared secret which is shared between said mobile subscriber station and a dynamically selected home agent in a secure manner to enable mobility binding updates to be performed securely; and
means, in said one of said visited wireless network and said home wireless network and responsive to said authentication center generating and transmitting authentication information for said mobile subscriber station to said dynamically selected home agent, for authenticating Mobile Internet Protocol registrations requested by said mobile subscriber station absent the transmission of said Mobile Internet Protocol shared secret to said roaming mobile subscriber station and said visited wireless network from said authentication center.

2. The dynamic home agent system of claim 1 wherein said means for forwarding comprises:
visitor location register means for transmitting said request for a dynamic IP address through a telephony signaling network that interconnects said home wireless network and said visited wireless network to a home location register of said home wireless network, where it is passed to said authentication center.

3. The dynamic home agent system of claim 2 further comprising:
means, in said authentication center responsive to said visitor location register not being Cellular Authentication and Voice Encryption algorithm capable, for creating a dynamic Mobile Internet Protocol shared secret;
means for returning said generated dynamic Mobile Internet Protocol shared secret to said home location register;
means for forwarding said generated dynamic Mobile Internet Protocol shared secret over said telephony signaling network in a response message to said visitor location register.

4. The dynamic home agent system of claim 3 wherein said means for authenticating comprises:
means, located in said visited wireless network and responsive to presence of said dynamic Mobile Internet Protocol shared secret in said response message, for dynamically selecting a local home agent located in said visited wireless network;
means for assigning a dynamic IP address to said mobile subscriber station;
means for propagating said mobile subscriber station's assigned dynamic IP address and said derived Mobile Internet Protocol shared secret to said dynamically selected home agent located in said visited wireless network;
means for attaching the IP address of said dynamically selected home agent to the response message that is transmitted to said mobile subscriber station.

5. The dynamic home agent system of claim 4 further comprising:
means for generating, in said mobile subscriber station equipped with said enhanced Cellular Authentication and Voice Encryption algorithm, said derived Mobile Internet Protocol shared secret; and
means, in said mobile subscriber station, for initiating Mobile Internet Protocol registrations using said IP address of said dynamically selected home agent and said derived Mobile Internet Protocol shared secret.

6. The dynamic home agent system of claim 2 further comprising:
means, in said authentication center responsive to said visitor location register being Cellular Authentication and Voice Encryption algorithm capable and enhanced, for producing an indication requesting said visitor location register to generate a Mobile Internet Protocol secret key;
means for returning said indication to said home location register;
means for forwarding said indication over said telephony signaling network in a response message to said visitor location register.

7. The dynamic home agent system of claim 6 wherein said means for authenticating comprises:
means, in said visited wireless network and responsive to presence of said indication in said response message, for dynamically selecting a local home agent located in said visited wireless network;
means, in said visited location register for deriving a dynamic mobile IP secret;
means for assigning a dynamic IP address to said mobile subscriber station;
means for propagating said mobile subscriber station's assigned dynamic IP address and said Mobile Internet Protocol shared secret to said dynamically selected home agent located in said visited wireless network;
means for attaching the IP address of said dynamically selected home agent to the response message that is transmitted to said mobile subscriber station.

8. The dynamic home agent system of claim 7 further comprising:
means for generating, in said mobile subscriber station equipped with said enhanced Cellular Authentication and Voice Encryption algorithm, said derived Mobile Internet Protocol shared secret; and
means, in said mobile subscriber station, for initiating Mobile Internet Protocol registrations using said IP address of said dynamically selected home agent and said derived Mobile Internet Protocol shared secret.

9. The dynamic home agent system of claim 2 further comprising:
means, in said authentication center responsive to said visitor location register requesting a dynamic IP address in said home wireless network to be assigned, for creating a dynamic Mobile Internet Protocol shared secret;
means for returning said generated dynamic Mobile Internet Protocol shared secret to said home location register;
means for dynamically selecting a local home agent located in said home wireless network;
means for assigning a dynamic IP address to said mobile subscriber station;
means for propagating said mobile subscriber station's assigned dynamic IP address and said Mobile Internet Protocol shared secret to said dynamically selected home agent in said home wireless network;
means for attaching the IP address of said dynamically selected home agent to the response message that is transmitted to said mobile subscriber station.

10. The dynamic home agent system of claim 9 further comprising:
means for generating, in said mobile subscriber station equipped with said enhanced Cellular Authentication and Voice Encryption algorithm, said derived Mobile Internet Protocol shared secret; and
means, in said mobile subscriber station, for initiating Mobile Internet Protocol registrations using said IP address of said dynamically selected home agent and said derived Mobile Internet Protocol shared secret.

11. A method of operating a dynamic home agent system for wireless communication systems to provide packet data services to a roaming mobile subscriber station in a visited wireless network by the dynamic assignment of a home agent in a one of a home wireless network and said visited wireless network, comprising the steps of:
forwarding, in response to said mobile subscriber station registering with said visited wireless network for packet data services and requesting a dynamic IP address of a one of said visited wireless network and said home wireless network to be assigned, said request for a dynamic IP address to said home wireless network;
dynamically generating, in an authentication center in said home wireless network and said mobile subscriber station, a Mobile Internet Protocol shared secret which is shared between said mobile subscriber station and a dynamically selected home agent in a secure manner to enable mobility binding updates to be performed securely; and
authenticating, in one of said visited wireless network and said home wireless network in response to said authentication center generating and transmitting authentication information for said mobile subscriber station to said dynamically selected home agent, Mobile Internet Protocol registrations requested by said mobile subscriber station absent the transmission of said Mobile Internet Protocol shared secret to said roaming mobile subscriber station and said visited wireless network from said authentication center.

12. The method of operating a dynamic home agent system of claim 1 wherein said step of forwarding comprises:
transmitting said request for a dynamic IP address from a visitor location register through a telephony signaling network that interconnects said home wireless network and said visited wireless network to a home location register of said home wireless network, where it is passed to said authentication center.

13. The method of operating a dynamic home agent system of claim 12 further comprising the steps of:
creating, in said authentication center in response to said visitor location register not being Cellular Authentication and Voice Encryption algorithm capable, a dynamic Mobile Internet Protocol shared secret;
returning said generated dynamic Mobile Internet Protocol shared secret to said home location register;
forwarding said generated dynamic Mobile Internet Protocol shared secret over said telephony signaling network in a response message to said visitor location register.

14. The method of operating a dynamic home agent system of claim 13 wherein said step of authenticating comprises:
dynamically selecting, in said visited wireless network in response to presence of said dynamic Mobile Internet Protocol shared secret in said response message, a local home agent located in said visited wireless network;
assigning a dynamic IP address to said mobile subscriber station;
propagating said mobile subscriber station's assigned dynamic IP address and said derived Mobile Internet Protocol shared secret to said dynamically selected home agent located in said visited wireless network;
attaching the IP address of said dynamically selected home agent to the response message that is transmitted to said mobile subscriber station.

15. The method of operating a dynamic home agent system of claim 14 further comprising the steps of:
generating, in said mobile subscriber station equipped with said enhanced Cellular Authentication and Voice Encryption algorithm, said derived Mobile Internet Protocol secret; and
initiating, in said mobile subscriber station, Mobile Internet Protocol registrations using said IP address of said dynamically selected home agent and said derived Mobile Internet Protocol shared secret.

16. The method of operating a dynamic home agent system of claim 12 further comprising the steps of:
producing, in said authentication center in response to said visitor location register being Cellular Authentication and Voice Encryption algorithm capable and enhanced, an indication requesting said visitor location register to generate a Mobile Internet Protocol secret key;
returning said indication to said home location register;
forwarding said indication over said telephony signaling network in a response message to said visitor location register.

17. The method of operating a dynamic home agent system of claim 16 wherein said step of authenticating comprises:
dynamically selecting, in said visited wireless network and in response to presence of said indication in said response message, a local home agent located in said visited wireless network;
deriving, in said visited location register, a dynamic mobile IP secret;
assigning a dynamic IP address to said mobile subscriber station;
propagating said mobile subscriber station's assigned dynamic IP address and said Mobile Internet Protocol shared secret to said dynamically selected home agent located in said visited wireless network;
attaching the IP address of said dynamically selected home agent to the response message that is transmitted to said mobile subscriber station.

18. The method of operating a dynamic home agent system of claim 17 further comprising the steps of:
generating, in said mobile subscriber station equipped with said enhanced Cellular Authentication and Voice Encryption algorithm, said derived Mobile Internet Protocol secret; and
initiating, in said mobile subscriber station, Mobile Internet Protocol registrations using said IP address of said dynamically selected home agent and said derived Mobile Internet Protocol shared secret.

19. The method of operating a dynamic home agent system of claim 12 further comprising the steps of:
creating, in said authentication center in response to said mobile subscriber station requesting a dynamic IP address in said home wireless network to be assigned, a dynamic Mobile Internet Protocol secret;
returning said generated dynamic Mobile Internet Protocol secret to said home location register;
dynamically selecting a local home agent located in said home wireless network;
assigning a dynamic IP address to said mobile subscriber station;
propagating said mobile subscriber station's assigned dynamic IP address and said Mobile Internet Protocol secret to said dynamically selected home agent in said home wireless network;
attaching the IP address of said dynamically selected home agent to the response message that is transmitted to said mobile subscriber station.

20. The method of operating a dynamic home agent system of claim 19 further comprising the steps of:
generating, in said mobile subscriber station equipped with said enhanced Cellular Authentication and Voice Encryption algorithm, said derived Mobile Internet Protocol secret; and
initiating, in said mobile subscriber station, Mobile Internet Protocol registrations using said IP address of said dynamically selected home agent and said derived Mobile Internet Protocol shared secret.
